# EUROPEAN PATENT APPLICATION

(11) **EP 4 561 014 A1**
(43) Date of publication of application: **28.05.2025**
(21) Application number: 23212275.4
(22) Date of filing: 27.11.2023
(51) Int. Cl.: H04L 49/111, G06F 13/38, G06F 13/40, H04L 49/15, H04L 49/00, H04L 49/351, H04L 49/45

(54) **NETWORK SWITCH**

(71) Applicant: NXP USA, Inc., Austin TX 78735 (US)
(72) Inventor: MARGINEAN,, Alexandru, Urdorf (CH); ST-DENIS,, Bernard Francois, Kanata, Ontario (CA); SCHELLHORN,, Mark Andrew, Ottawa, Ontario (CA)
(74) Representative: Schmütz, Christian Klaus Johannes

(57) **Abstract**

A network switch comprising: a plurality of Ethernet ports for coupling to one or more devices; a switch-to-switch interface configured to provide for connection of the network switch to at least one other network switch; wherein the switch-to-switch interface comprises a Peripheral Component Interconnect Express, PCIe, interface.

## Description

### Field

The present disclosure relates to network switch and, in particular to an Ethernet-based network switch having a switch-to-switch interface for coupling the network switch to at least one further network switch provided by a PCIe interface. It also relates to an associated method.

### Background

It is known to communicatively couple network switches, such as Ethernet switches, together. As a specific example of communicatively coupled switches, a stacked switch comprises the coupling together a plurality of network switches, which may be operated as a single logical switch. Providing an effective communicatively coupled network switch is a challenge.

### Summary

According to a first aspect of the present disclosure there is provided a network switch comprising:
a plurality of Ethernet ports for coupling to one or more devices;
a switch-to-switch interface configured to provide for connection of the network switch to at least one other network switch;
wherein the switch-to-switch interface comprises a Peripheral Component Interconnect Express, PCIe, interface.

In one or more embodiments, the switch-to-switch interface is configured for switch stacking the network switch with the at least one other network switch.

In one or more embodiments, the network switch includes a switch core module for providing packet switching between each of the plurality of Ethernet ports and a controller for providing an interface between the switch core module and the switch-to-switch interface.

In one or more embodiments, the controller is configured to receive one or more Ethernet frames and provide transmission-data formed of the one or more Ethernet frames to the PCIe interface for encapsulation to form one or more PCIe packets for transmission via the PCIe interface to the at least one other network switch.

In one or more embodiments, the one or more PCIe packets are Transaction Layer Packets of Memory Write, MWr, type.

In one or more embodiments, the controller is configured to provide instructions to the PCIe interface to one or both of initiate and terminate Memory Write transactions by way of said Transaction Layer Packets of MWr type.

In one or more embodiments, the transmission-data provided to the PCIe interface by the controller comprises a plurality of Ethernet frames, and wherein the controller is configured to add metadata to the transmission-data to delineate the one or more Ethernet frames or to delineate parts of the one or more Ethernet frames when received by the at least one other network switch.

In one or more embodiments, the controller is configured to add a frame check sequence to the transmission-data provided to the PCIe interface.

In one or more embodiments, the controller is configured to be seen as a port by the switch core module

In one or more embodiments, the controller is configured to receive received-data from the PCIe interface originating from said at least one other network switch, and extract at least one Ethernet frames therefrom for forwarding, by the switch core module, to a specific one of the plurality of Ethernet ports.

In one or more embodiments, the controller is configured to, based on metadata in the receive-data that delineates the one or more Ethernet frames, reconstruct the one or more Ethernet frames for forwarding to the switch core module.

In one or more embodiments, the PCIe interface is configured as Root Complex PCIe controller or an End Point PCIe controller communicably coupled with the controller.

In one or more embodiments, the at least one other network switch comprises a first network switch and a second network switch, and
i) the network switch comprises a first controller and a first PCIe interface for communication with the first network switch, and a second controller and a second PCIe interface for communication with the second network switch; or
ii) a first controller for communication with the first network switch via the PCIe interface, a second controller for communication with the second network switch via the PCIe interface.

According to a second aspect of the disclosure we provide a system comprising a first network switch and a second network switch, wherein the first network switch comprises the network switch of the first aspect and the second network switch comprises:
a second plurality of Ethernet ports for coupling to one or more second devices;
a second switch-to-switch interface configured to provide for connection of the second network switch to the switch-to-switch interface of the first network switch;
wherein the second switch-to-switch interface comprises a Peripheral Component Interconnect Express, PCIe, interface.

According to a third aspect of the disclosure, we provide a method for operating a network switch, wherein the network switch comprises a plurality of Ethernet ports for coupling to one or more devices, and a switch-to-switch interface configured to provide for connection of the network switch to at least one other network switch, and wherein the switch-to-switch interface comprises a Peripheral Component Interconnect Express, PCIe, interface, the method comprising:
providing for packet forwarding of one or more network frames received from the plurality of Ethernet ports that have a destination address reachable via the at least one other network switch via the switch-to-switch interface.

In one or more embodiments, the network switch includes a switch core module for providing packet forwarding between each of the plurality of Ethernet ports and a controller for providing an interface between the switch core module and the switch-to-switch interface, wherein the controller is configured to be seen as a port to the switch core module.

In one or more embodiments, the method include receiving, by the controller, one or more Ethernet frames and providing transmission-data formed of the one or more Ethernet frames to the PCIe interface for encapsulation to form one or more PCIe packets for transmission via the PCIe interface to the at least one other network switch.

In one or more embodiments, the one or more PCIe packets are Transaction Layer Packets of Memory Write, MWr, type.

In one or more embodiments, the method comprises, by the controller, providing instructions to the PCIe interface to one or both of initiate and terminate Memory Write transactions by way of said Transaction Layer Packets of MWr type.

In one or more embodiments, the transmission-data provided to the PCIe interface by the controller comprises a plurality of Ethernet frames, and wherein the method includes, by the controller, adding metadata to the transmission-data to delineate the one or more Ethernet frames or to delineate parts of the one or more Ethernet frames when received by the at least one other network switch.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of a network switch having a switch-to-switch interface that communicatively couples it to a further network switch;
Figure 2 shows a block diagram of the network switch providing an example embodiment of its functional components;
Figure 3 shows a flowchart providing an example initialization sequence for the network switch;
Figure 4 shows a flowchart providing an example method for the transfer of Ethernet traffic for the network switch;
Figure 5 shows an example method and frames for ethernet frame delineation.

### Detailed Description

The present examples relate to a distributed switch architecture or stacked switch. Switch stacking is an established method for managing multiple Ethernet network switches as a single unit. It allows adding new network switches in a stack to increase the port count and overall switch bandwidth. Central to stacking switches is the connectivity between the network switches in a stack. The main requirement is to support high bandwidth between the network switches such that data flow between all the Ethernet ports in the network switch stack is not restricted in order to mitigate congestion.

Example embodiments proposed herein utilise data transfers across Peripheral Component Interconnect Express, PCIe links between the network switches. This has been found, in at least some examples, to allow the network switches to take advantage of the higher bandwidth and bandwidth scalability options of PCIe to support communicatively coupled switches. In the present examples, the PCIe interface used is as defined in the PCIe 4.0 specification, but the principles may apply to other PCIe specifications, such as PCIe 5.0 and 6.0 and related specifications of those generations of PCIe. It will be appreciated that embodiments of the disclosure may utilise other past and future PCIe specifications.

Communicatively coupling, such as switch stacking, allows, among other advantages, higher flexibility in terms of port capacity. Switches can be added or removed from the system of network switches i.e. the "switch stack", to reach a desired port count for the deployment.

In some examples, one of the challenges in supporting communicatively coupled switches or switch stacking is ensuring sufficient bandwidth between the network switches within the switch stack. Typically, this bandwidth must be much higher than the bandwidth of each of the regular switch ports made available to devices/users. This is to ensure that there are no significant bandwidth restrictions for data flows between any subsets of switch ports in the entire stack.

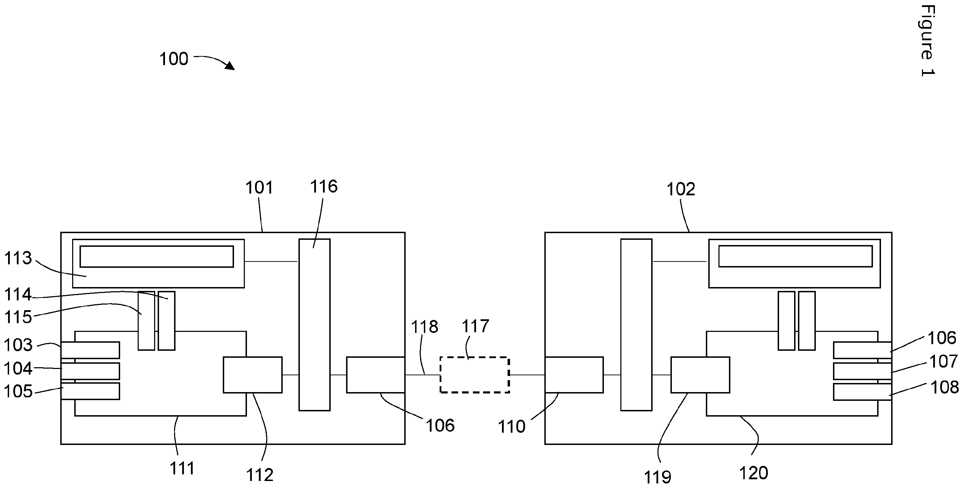

Example Figure 1 shows a system 100 comprising communicatively coupled network switches. Figure 1 also shows an example embodiment of a network switch 101, which may be referred to as the first network switch 100. The network switch 101 is shown communicatively coupled with a second network switch 102. In the present examples, the network switches 101, 102 are Ethernet network switches, although the disclosure is not limited to Ethernet based implementations. It will also be appreciated that the network switches 101, 102 may each be part of a device having other processing functionality. Thus, the network switch 101, 102 represents embedded functionality in a larger device.

The network switch 101 comprises a plurality of Ethernet ports 103, 104, 105 for coupling to one or more devices. Likewise, the second network switch 102 comprises a plurality of Ethernet ports 106, 107, 108 for coupling to one or more devices. The network switch 101 also includes a switch-to-switch interface 106 (or, in some examples, ethernet switch to ethernet switch interface) configured to provide for connection of the network switch 101 to the second network switch 102. In particular, the switch-to-switch interface 106 is configured to couple to the second network switch 102 via a corresponding second switch-to-switch interface 110. The switch-to-switch interface 106 and the second switch-to-switch interface 110 comprises a Peripheral Component Interconnect Express, PCIe, interface. Accordingly, the network switch 101 is configured to provide for communication between the devices coupled to the Ethernet ports 103-105 and devices coupled to the Ethernet ports 106-108 by forwarding communication traffic via the PCIe, switch-to-switch interface 106 between the network switch 101 and the second network switch 102.

The embodiments make use of PCIe connectivity between the network switches 101, 102. The network switches 101, 102 exchange data over a PCIe link formed between the interfaces 106, 110, which may provide advantages given the higher relative bandwidth of PCIe links, compared to Ethernet links. In the present example, the use of generic PCIe hardware may also be advantageous. In some examples, the PCIe switch-to-switch interface hardware 106, 110 establishes a communicative connection between the switches while not preventing any desired data exchange protocol between the network switches to be used.

The network switch 101 will be described in more detail. However, it will be appreciated that the second network switch 102 is substantially similar.

In the present example, the network switch 101 includes an Ethernet switch core module 111 for providing packet switching and/or frame forwarding between each of the plurality of Ethernet ports 103-105 and a controller 112. The controller 112 is configured to provide an interface between the switch core module 111 and the switch-to-switch interface 106.

In the present example, the controller is configured with an address, such as a MAC address, that is discoverable or given to the switch core module 111 such that the controller is addressable. Accordingly, the switch core module 111 may see the controller 112 like any other Ethernet port 103, 104, 105, which it can forward frames/packets to. As such, the switch core module 111 may be configured to, on receipt of a network frame from one of ports 103, 104, 105, examine an address field of the network frame/packet, such as a destination MAC address field. The switch core module 111 may reference a look up table or forwarding database of e.g. destination addresses versus ports 103, 104, 105, 112 (as the controller 112 is seen as a port). If the destination address is reached via the second network switch 102, the switch core module 111 may forward the network frame/packet to the address of the controller 112. The controller 112 is configured to forward the received network frame/packet to the second network switch 102 using the switch-to-switch interface 106. Common rules regarding forwarding, access control, QoS and other network switch functionalities may apply to the controller 112 "port" in the same way they apply to the other switch ports 103, 104, 105.

Thus, in summary, the controller 112 is configured to receive one or more network frames from the switch core module 111 and provide transmission-data formed of the one or more Ethernet frames to the PCIe interface 106. The PCIe interface 106 may then provide for transfer of the information to the second network switch 102 in accordance with the PCIe specification, such as by encapsulation of the transmission data to form one or more PCIe packets for transmission via the PCIe interface 106.

In the present example, the controller 112 and the PCIe interface 106 are configured such that the PCIe packets comprise Transaction Layer Packets of Memory Write, MWr, type, which will be familiar to those skilled in the art of PCIe. Thus, the controller 112 and PCIe controller 106 are configured to initiate and terminate Memory Write transactions by way of said Transaction Layer Packets of MWr type. Accordingly, the aforementioned transmission-data may comprise memory write transactions as specified in the PCIe specification.

It has been found that data transfer between the network switches 101, 102 using PCIe Memory Write Request transactions is particularly efficient.

The network switch 101 may further comprise a processor 113 for configuring the network switch 101. The network switch 101 may include an ethernet interface 114, 115 for controlling the switch core module 111. The network switch 101 may include an interconnect 116, embodied as a system bus (e.g. AXI or AHB) or Network on Chip. The controller 112 may be configured to communicate with the switch-to-switch interface 106 via the interconnect. The controller 112 may comprise a Media Access Controller. In some examples, the media comprises AXI. The controller 112 may comprise a Media Access Controller having Direct Memory Access functionality and may be so called a DMA-MAC. The processor 113 may be configured to configure the PCIe interface 106 via the interconnect 116

The network switch 101, including the processor 113 and interconnect 116, may be implemented as a system-on-chip.

In Figure 1, the switch-to-switch interface 106 is shown physically coupled to the second switch-to-switch interface 110 by a data cable 118. A dashed box, however, shows an optional PCIe switch 117 to provide switching of the PCIe packets between the switch-to-switch interfaces 106, 110 and any other switch-to-switch interfaces (not shown) of other network switches. In some embodiments, the PCIe switch 117 may couple to other non-network switch devices, such as a nonvolatile memory express (NVMe) based device or an Ethernet network interface controller (NIC) or others to provide peer-to-peer connections over PCIe.

In other examples, rather than providing a PCIe switch 117, each network switch 101, 102 may be provided with a plurality of controllers 112 and a corresponding plurality of switch-to-switch interfaces 106, 110, each corresponding pair configured to provide a connection to corresponding components in a different, remote, network switch. In other examples, there may be provided a PCIe interface 106 per remote network switch that the network switch 101 is configured to communicate with, and a shared controller 112 that provides the transmission-data to each of the plurality of PCIe interfaces as required.

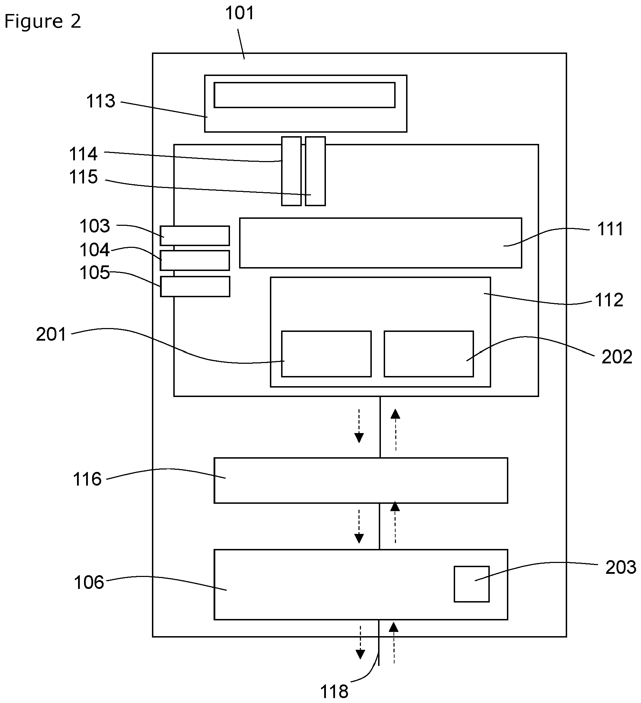

Figure 2 shows the network switch 101 in more detail. The same reference numerals have been used for the same parts.

The PCIe interface 106 may comprise a Root Complex PCIe controller 203 or an End Point PCIe controller communicably coupled with the controller 112.

Further, the controller 116 is shown comprising a transaction initiator block 201 and a transaction target block 202. The transaction initiator block 201 is configured to provide said transmission-data, such as initiation of the Memory Write transactions via the PCIe interface 106. The transaction target block 202 is configured to provide said termination of the Memory Write transactions (or, more generally, receive received-data) received via the PCIe interface 106.

We will now describe the operation of the network switch 101 first in general terms and then in more detail.

As mentioned, the controller 112 receives the network frames forwarded by the switch core module 111. The controller 112 provides transmission-data to the PCIe interface, which in this example is provided by the transaction initiator 201 being configured to initiate the memory write transaction and, accordingly, provide the PCIe interface 106 with the memory write data to provide for transmission of the network frame(s) to the second network switch 102. Thus, while the transactions are termed memory write transactions, in the present examples, the functionality is used more generally to perform a write transaction corresponding to a PCIe memory write request. In some examples, the transmission-data provided to the PCIe interface 106 by the controller 112 represents a plurality of Ethernet frames. In such an instance, the controller 112 may be configured to add metadata to the transmission-data to delineate the one or more Ethernet network frames. Thus, the second network switch 102 may then use the metadata when the PCIe data is received to reconstruct the plurality of Ethernet network frames from the PCIe data.

The controller 112 may be configured to add a frame check sequence to the transmission-data provided to the PCIe interface 106. The frame check sequence may comprise a CRC code.

The controller 112 may also receive ethernet network frames from the second network switch 102. Accordingly, the controller 112 may be configured to receive "received-data" from the PCIe interface 106. The received-data comprises information that originated from the second network switch 102. It will be appreciated the received-data may be the data representing the memory write transaction initiated by the other network switch and represents one or more ethernet network frames or a portion of an ethernet network frame. As will be known, typically, the memory write transaction size is 64B, 128B or 256B. An ethernet frame size can range from 64B to 9K (jumbo frame). The controller 112 may be configured to extract the one or more Ethernet network frames from the received-data or memory write transaction data for forwarding, by the switch core module 111, to a specific one of the plurality of Ethernet ports 103, 104, 105. The received-data may include metadata that delineates the one or more Ethernet network frames, thereby enabling the controller 112 to reconstruct the one or more Ethernet frames for forwarding to the switch core module 111.

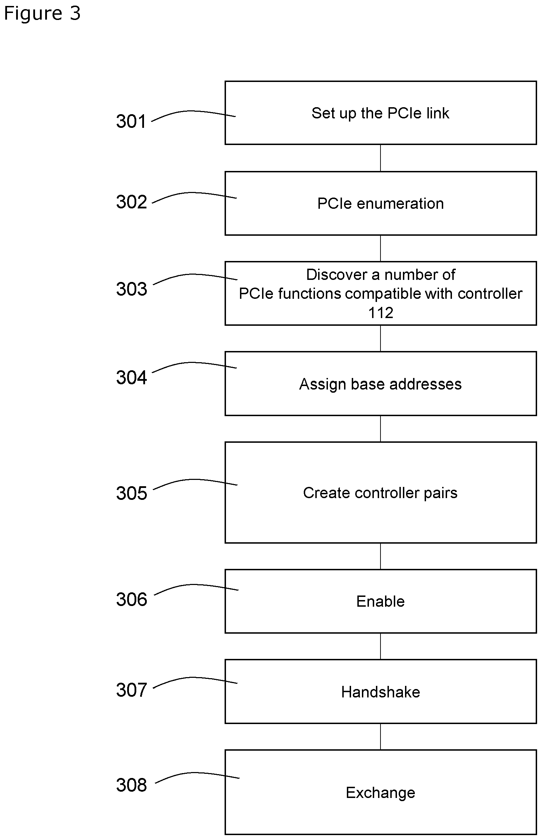

The flow chart of Figure 3 provides more details of the operation of the network switch 101.

The processor 113 or the processor 203 hosting the PCIe stack of the PCIe interface 106, may perform steps 301-304. These are typical steps performed by a processor running a PCIe stack that acts as a PCIe Root Complex (RC).

These steps include enabling the PCIe link 301, discovering the PCIe topology 302, identifying 303 PCIe functions associated with controller 112 and assigning 304 base addresses to the controller 112 for PCIe Functions. These addresses are used for data transactions (such as data writes).

The processor 203 may be configured to discover the one or more controllers 112. Thus, software executed by the processor 203 may discover the controllers 112 through a process like PCIe enumeration or the processor may have a predetermined configuration in relation to the controllers 112.

Step 305 shows that once all the controllers 112 in the system have been identified, the software executed by the processor 203 decides how they should be paired with corresponding controllers 119 in the other network switches. This may be based on a predetermined configuration. Thus, each paired controller is configured with its paired controller's target address. This can be done either via PCIe enumeration, such as at step 302, or statically configured.

The base addresses allow the controllers 112, 119 in each controller pair to perform data transactions (such as memory writes), targeting the other controller 112, 119 of the pair.

Step 306 shows that after the configuration of a controller 112, 119 pair is complete, the controllers 112, 119 of the pair are enabled. After being enabled, the paired controllers 112, 119 of network switch 101 and second network switch 102 may perform a handshake 307 to confirm the respective other controller 112, 119 is running and ready to receive traffic. The handshake could be based on an exchange of messages in a predefined format known by the controllers 112, 119. It will be appreciated that each controller may have an operational state of either enabled or disabled. Once configured with the remote controller's address, the handshake 307 may be one optional method to change its state to enabled but in other examples, the enabled state is set manually. The step 306 may also represent each controller being enabled such that it represents a port on the network switch, such as to the switch core module 111. Thus, in some examples, steps 306 and 307 may be parts of the same step.

After the handshake is complete, the controllers 112, 119 may start exchanging 308 PCIe data (as, for example, memory writes) containing the ethernet network frames between the respective network switches 101, 102. It will be appreciated that the phrase "PCIe data" is used to represent data for transmission over PCIe, but may, more generally, comprise one or more data blocks.

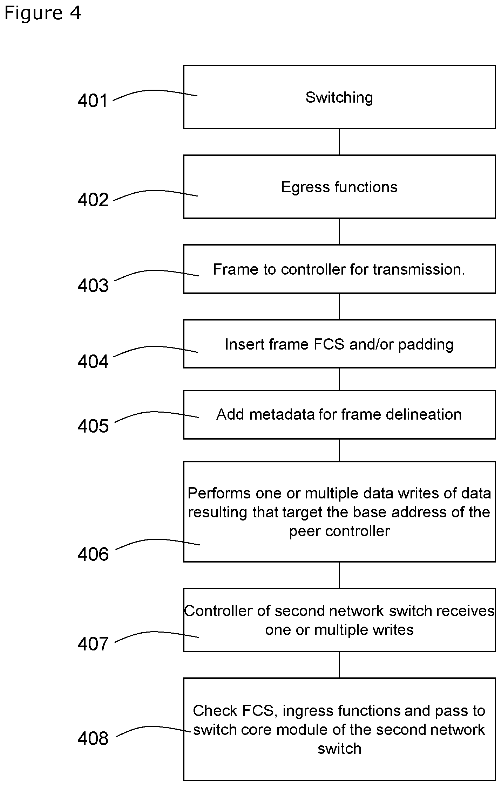

Figure 4 provides an example of a more detailed embodiment of the exchange of ethernet network frames.

Steps 401-403 are typical functions an Ethernet network switch performs to determine the egress interfaces for a given Ethernet network frame. Step 401 shows the switch core module 111 being configured to perform its switching function and, in this example, select the controller 112 for egress. As mentioned previously, the controller 112 may have a MAC and therefore the switch core module 111 can route the network frames to the controller like any other device. Step 402 shows the network switch 101 is configured to perform queueing, scheduling, egress QoS, any other egress functions on the network frame. Step 403 shows transfer of the network frame by the switch core module 111 to the controller 112.

Step 404 shows the controller 112 may be configured to add information in to the network frame or frames, such as padding and/or a Frame Check Sequence (FCS).

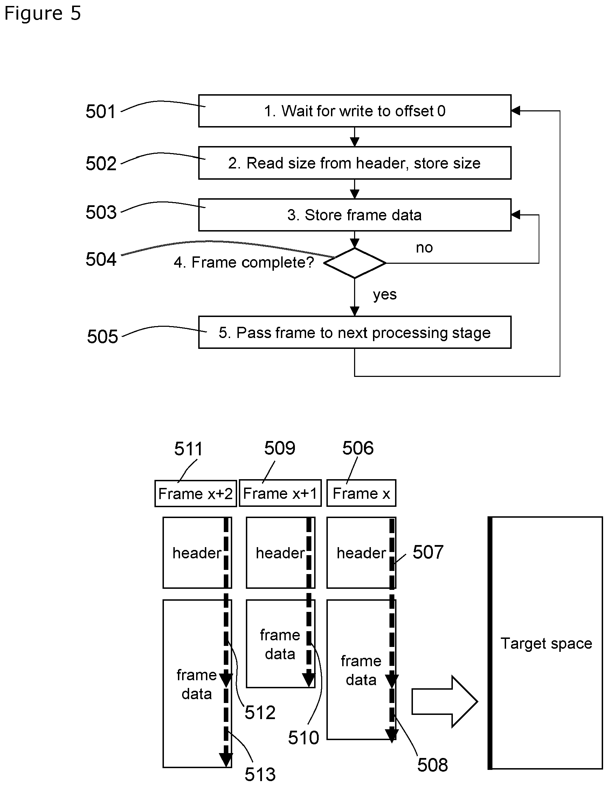

Step 405 shows the controller 112 may be configured to add the metadata for network frame delineation, as mentioned above and described in relation to figure 5.

Step 406 shows the controller 112 being configured to perform one or more "memory writes" with the transmission-data that results from step 405. The number of memory writes may be a function of one or more of: the total data size for the given network frame, the maximum transaction size supported by the controller 112, the capability of the interconnect 116 and the PCIe links provided between the PCIe interfaces 106, 110.

These memory writes target the PCIe base address of the peer controller 119, based on the prior configuration in step 304. These memory writes may be performed sequentially and the ordering of the writes may be ensured between initiator controller 112 and target controller 119 through the interconnects 116 and PCIe links.

Step 407 shows the controller 119 receiving the memory writes. The controller 119 is configured to detect the start of the network frame.

Step 408 shows the receipt of the memory writes may include one or more steps, such as checking the FCS, parsing of the Ethernet network frames, filtering and classification, QoS, queueing and others. The frame is further passed to switch core module 120 of the second network switch 102 for forwarding decisions to an appropriate port 106, 107, 108 of the second network switch 102.

Figure 5 illustrates the process of network frame delineation in the transmission-data and/or memory write transactions.

The controller 112, 119 that receives the received-data from the respective PCIe interface 106, 110 may be configured to perform delineation of the network frames. The controllers 112, 119 receive a stream of PCIe memory writes targeting assigned address space (as will be appreciated by those skilled in the transfer of data by PCIe) and are configured to identify the start and end of each network frame in the received-data.

In some examples, the memory write transactions may be such that the source controller e.g. 119 writes a full network frame in each memory write transaction. Accordingly, the destination controller e.g. 112 can be configured to extract the single network frame from each memory write transaction. However, in other examples, the memory write transactions may comprise parts of network frames.

A proposed example method to be performed by the respective controllers 112, 119 is described. In this example, the controller 119 is assumed to generate the transmission-data and the controller 112 is the destination for the received-data.

Thus, the controller 119 is configured to prepend the data being sent over PCIe with a segment header and/or a trailer. The segment header and/or trailer contains, at a minimum, the length of the data (i.e. the network frame) being transmitted. This allows the receiving controller 112 to determine when a full network frame has been received.

For example, a receiving controller 112 is configured to expect a header to be written at, for example, at an offset 0. Thus, a simplified state machine for the controller 112 performs as follows:
- the controller 112, at step 501 waits for a memory write to offset 0 and parses the segment header.
- the controller 112 extracts the size from the segment header and stores it at step 502 for use in the following steps.
- the controller 112 receives the received-data comprising the network frames and stores it in a local buffer at step 503.
- the controller 112 is configured to make a determination at step 504. If a full network frame is received, the controller 112 dispatches the network frame to the next processing stage, shown by step 505, and returns to the step 501. Otherwise the controller 112 is configure to loop to step 503 to receive further received-data until the frame is complete with reference to the size stored at step 502.

Thus, frame "x" 506 is received as two memory writes 507 and 508. Frame "x+1" 509 is received as one memory write 510. Frame "x+2" 511 is received as two memory writes 512, 513.

We also disclose a method for operating a network switch 102 comprising providing for packet forwarding (by the switch core module 111) of one or more network frames received from the plurality of Ethernet ports that have a destination address reachable via the at least one other network switch via the switch-to-switch interface (using the controller 112).

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A network switch comprising:
a plurality of Ethernet ports for coupling to one or more devices;
a switch-to-switch interface configured to provide for connection of the network switch to at least one other network switch;
wherein the switch-to-switch interface comprises a Peripheral Component Interconnect Express, PCIe, interface.

2. The network switch of claim 1, wherein the switch-to-switch interface is configured for switch stacking the network switch with the at least one other network switch.

3. The network switch according to claim 1 or claim 2, wherein the network switch includes a switch core module for providing packet switching between each of the plurality of Ethernet ports and a controller for providing an interface between the switch core module and the switch-to-switch interface.

4. The network switch according to claim 3, wherein the controller is configured to receive one or more Ethernet frames and provide transmission-data formed of the one or more Ethernet frames to the PCIe interface for encapsulation to form one or more PCIe packets for transmission via the PCIe interface to the at least one other network switch.

5. The network switch according to claim 4, wherein the one or more PCIe packets are Transaction Layer Packets of Memory Write, MWr, type.

6. The network switch according to claim 5, wherein the controller is configured to provide instructions to the PCIe interface to one or both of initiate and terminate Memory Write transactions by way of said Transaction Layer Packets of MWr type.

7. The network switch according to claim 4, wherein the transmission-data provided to the PCIe interface by the controller comprises a plurality of Ethernet frames, and wherein the controller is configured to add metadata to the transmission-data to delineate the one or more Ethernet frames or to delineate parts of the one or more Ethernet frames when received by the at least one other network switch.

8. The network switch according to any one of claims 4 to 7, wherein the controller is configured to add a frame check sequence to the transmission-data provided to the PCIe interface.

9. The network switch accordingly to claim 3, wherein the controller is configured to be seen as a port by the switch core module.

10. The network switch according to claim 3, wherein the controller is configured to receive received-data from the PCIe interface originating from said at least one other network switch, and extract at least one Ethernet frames therefrom for forwarding, by the switch core module, to a specific one of the plurality of Ethernet ports.

11. The network switch according to claim 10, wherein the controller is configured to, based on metadata in the receive-data that delineates the one or more Ethernet frames, reconstruct the one or more Ethernet frames for forwarding to the switch core module.

12. The network switch according to any preceding claim, wherein the PCIe interface is configured as Root Complex PCIe controller or an End Point PCIe controller communicably coupled with the controller.

13. The network switch according to claim 1, wherein the at least one other network switch comprises a first network switch and a second network switch, and
i) the network switch comprises a first controller and a first PCIe interface for communication with the first network switch, and a second controller and a second PCIe interface for communication with the second network switch; or
ii) a first controller for communication with the first network switch via the PCIe interface, a second controller for communication with the second network switch via the PCIe interface.

14. A system comprising a first network switch and a second network switch, wherein the first network switch comprises the network switch of any one of claims 1 to 13 and the second network switch comprises:
a second plurality of Ethernet ports for coupling to one or more second devices;
a second switch-to-switch interface configured to provide for connection of the second network switch to the switch-to-switch interface of the first network switch;
wherein the second switch-to-switch interface comprises a Peripheral Component Interconnect Express, PCIe, interface.

15. A method for operating a network switch, wherein the network switch comprises a plurality of Ethernet ports for coupling to one or more devices, and a switch-to-switch interface configured to provide for connection of the network switch to at least one other network switch, and wherein the switch-to-switch interface comprises a Peripheral Component Interconnect Express, PCIe, interface, the method comprising:
providing for packet forwarding of one or more network frames received from the plurality of Ethernet ports that have a destination address reachable via the at least one other network switch via the switch-to-switch interface.
